# EUROPEAN PATENT SPECIFICATION

(11) **EP 2 922 744 B1**
(45) Date of publication and mention of the grant of the patent: **19.06.2019**
(21) Application number: 13776845.3
(22) Date of filing: 12.09.2013
(51) Int. Cl.: B62J 6/02, B62J 6/04, B62J 11/00, B62J 27/00, B62J 99/00

(54) **BICYCLE LIGHT-PROJECTING DEVICES WITH LASER BEAM**
LEUCHTVORRICHTUNG FÜRS FAHRRAD MIT LASERSTRAHL
DISPOSITIF D'ÉCLAIRAGE DE BICYCLETTE AVEC FAISCEAU LASER

(30) Priority: 21.11.2012 GB 201220965
(43) Date of publication of application: 30.09.2015
(73) Proprietor: Smidsy Ltd., London E2 8DD (GB)
(72) Inventor: WHITE, Matthew, Bexhill-on-Sea Sussex TN40 1HH (GB); BROOKE, Emily, London E28DD (GB)
(74) Representative: Mewburn Ellis LLP
(86) International application number: PCT/GB2013/052394
(87) International publication number: WO 2014/080168

(56) References cited:
- EP-A1- 2 284 069
- EP-A2- 1 765 038
- GB-A- 2 474 486
- US-A1- 2003 227 773
- US-A1- 2010 283 590
- US-A1- 2012 112 635
- US-A1- 2012 285 026

## Description

This invention relates to light-projecting devices and a mount for a light-projecting device. In one particular application, such light-projecting devices may be used with bicycles.

Light-projecting devices, such as lamps, torches and the like are of course very well-known for various applications. In the field of lamps for bicycles for example, it is now common to use one or more light-emitting diodes (LEDs) to provide a visible light output for both front and rear lamps.

Recently, it has been proposed (see GB-B-2490889) to provide an additional safety device for bicycles, whereby an image, such as the symbol of a bicycle, is projected onto the ground in front of the bicycle, which may be seen easily by other road users. The image may be created by a laser.

In addition to this, and accordingly to the preamble of claim 1, US201 2/0285026 A1 describes apparatus for marking guidelines for a transportation vehicle, GB 2474486 A describes a portable safety light, US 2010/0283590 A1 describes another safety light device, and EP 1765038 A2 describes a light assembly with a rechargeable battery.

It is an aim of the present invention to improve such a device, and so to provide an integrated laser image projection component with an additional visible light source, so as to provide both laser image generation and illumination within a unitary device. While this has particular relevance to bicycles, and indeed will be described below referring to bicycle use predominantly, it will be recognized that such a device may have utility with other vehicles.

An additional aim of the present invention is to provide a safety and security mechanism for an image generating device, to prevent actuation of a laser source once the device is removed from a bicycle. In accordance with the invention, this aim is achieved by incorporating a Hall-effect component within the device.

In accordance with a first aspect of the present invention there is provided a light-projecting device for use on a vehicle, as set out in claim 1.

In accordance with a second related example there is provided a mount for attaching a light-projecting device to a bicycle, the light-projecting device comprising a light-projecting unit comprising a light generating means, an electric power source for the light generating means and a magnetic switch component connected between the light generating means and the power source
the mount comprising attachment means for attaching the mount to the bicycle and receiving means for releasably receiving the light-projecting unit,
wherein the mount further comprises a magnetic member, such that when the light-projecting unit is received by the mount, the magnetic switch component comes under the magnetic influence of the magnetic member and enables current to flow from the power source to the light generating means.

In accordance with a third related example there is provided a light-projecting device for use on a bicycle, the device comprising:
a light-projecting unit comprising a light generating means and an electric power source for the light generating means, and
a mount comprising attachment means for attaching the mount to the bicycle and receiving means for releasably receiving the light-projecting unit,
wherein the mount further comprises a magnetic member and the light-projecting unit comprises a magnetic switch component connected between the light generating means and the power source, such the magnetic switch component enables current to flow from the power source to the light generating means when the light-projecting unit is received by the mount and the magnetic switch component is under the magnetic influence of the magnetic member, but blocks said current flow when the unit is removed from the mount.

In accordance with a fourth related example there is provided a light-projecting device for use on a bicycle, the device comprising:
a light-projecting unit comprising a light generating means and an electric power source for the light generating means, and
a mount comprising attachment means for attaching the mount to the bicycle and receiving means for releasably receiving the light-projecting unit,
member and is adapted to enable current to flow from the power source to the light generating means.

In one preferred embodiment of the present invention there is provided a light-projecting device for use on a bicycle, motorcycle or other vehicle to project light ahead of the vehicle, wherein the light projected includes an image that is projected onto the path ahead of the vehicle.

In any case, the image projected may be representative of the vehicle to alert other road users to the presence of the vehicle, to its direction and / or speed of movement, and/or to an incipient or existing dangerous condition. The image may for example be a symbol representative of a bicycle, motorcycle or other vehicle.

The light-projecting device of the invention may include a sub-assembly in which an elongate laser-source of light is carried to extend lengthwise on an elongate chassis that carries a printed circuit board as part of the electrical energisation circuitry of the laser-source. An element to impose the image in the light emitted by the laser-source, for example by diffraction through optical interference, may be carried with the laser-source on the chassis. Furthermore, another light source, for example in the form of a light-emitting diode, may be carried by the chassis to emit light in addition to that emitted by the laser-source.

The invention will now be described, by way of example, with reference to the accompanying drawings, in which:
Fig. 1 schematically shows a perspective view from above and the rear an embodiment of the light-projecting device in accordance with an embodiment of the present invention;
Fig. 2 schematically shows an exploded view of the light-projecting device of Fig. 1;
Fig. 3 schematically shows a longitudinal section of the light-projecting device of Fig. 1;
Fig. 4 schematically shows an exploded view of a sub-assembly that forms part of the light-projecting device of Fig. 1;
Fig. 5 is a schematic diagram of a switching circuit for use in an embodiment of the present invention;
Fig. 6 is a schematic, exploded perspective view of internal components of a device in accordance with a further embodiment of the present invention;
Fig. 7 is a schematic, sectional view of the components of Fig. 6;
Fig. 8 is a schematic, sectional view similar to Fig. 7, including a casing;
Fig. 9 schematically shows a mounting mechanism for the device of Fig. 6;
Fig. 10 schematically shows the mechanism of Fig. 9 when disassembled;
Fig. 11 schematically shows a sectional view of the device of Fig. 6 with mounting mechanism attached; and
Figs. 12a-e schematically show the device of Fig. 6 attached in a variety of positions, in both plan and perspective views.

The example of a light-projecting device to be described with reference to the drawings is for use on a bicycle and will be described in this context, but it has wider use than this and may be used similarly on a motorcycle or other vehicle to provide a projection of a light image for safety purposes, for example in the forward direction ahead of the vehicle, rear direction behind the vehicle or even laterally depending on the particular requirement.

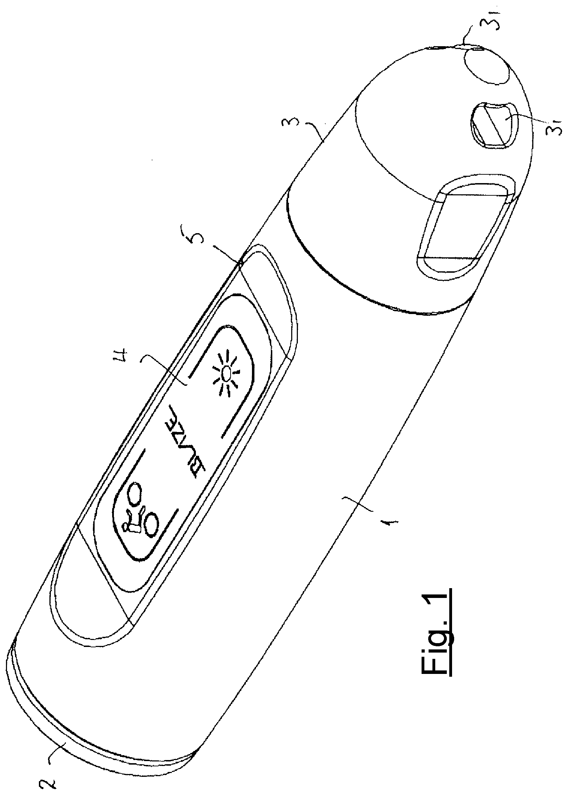

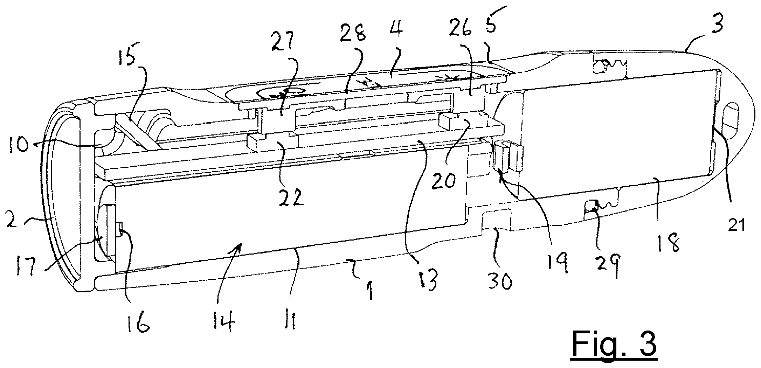

Referring to Figs. 1 to 3, the light-projecting device in a first embodiment comprises and is housed within a cylindrical light-alloy casing 1. The front end of the casing 1 is sealed closed by a transparent, plastics disc 2, and a domed cap 3 is screwed onto the rear end to complete closure and sealing of the casing 1.

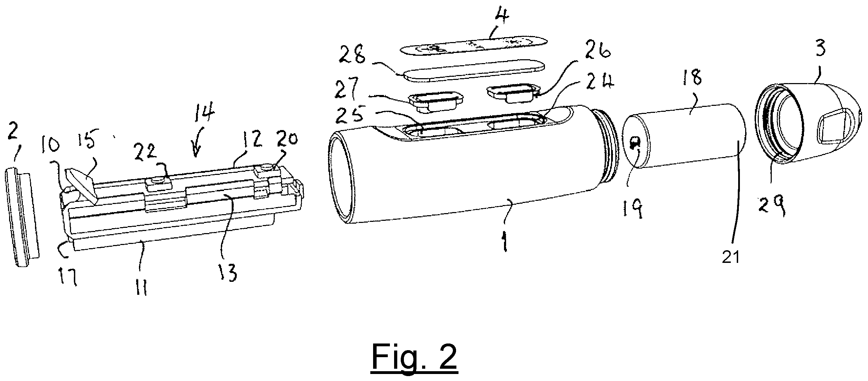

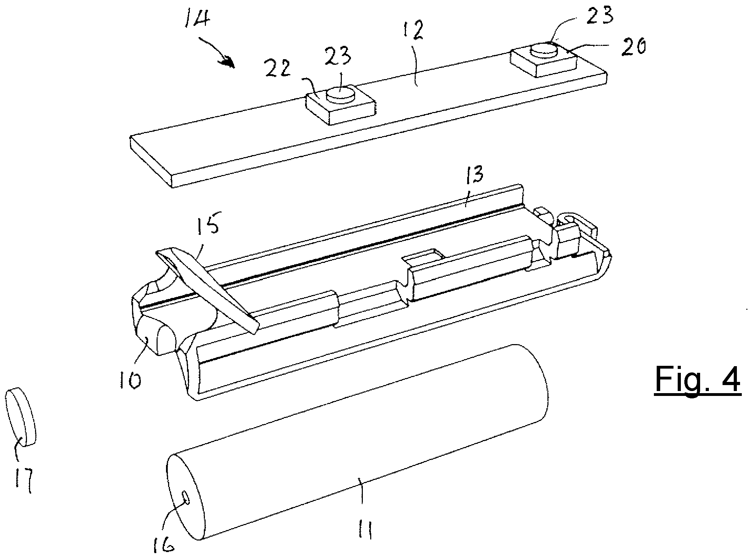

A thin, metal panel 4 is located within an indented portion 5 of the upper surface of the casing 1 and is etched with indicia to show regions of the panel 4 that may be depressed by finger or thumb in the control of operation of two light sources within the device. The two light sources are provided respectively, as shown in Figs. 2 to 4, by a light-emitting diode (LED) 10 and a laser source module 11 that are mounted together with a printed-circuit board (PCB) 12 on an elongate chassis 13 in a sub-assembly 14.
In the sub-assembly 14, which is shown in exploded form in Fig. 4, the LED 10 is carried on the chassis 14 beneath an angled mirror 15 which serves to reflect light from the LED 10 forward through the front, transparent disc 2, producing a visible light beam. The laser module 11 is mounted on the chassis 14 beneath the PCB 12, to direct the coherent beam of light emitted from its projection-aperture 16 forward through the disc 2 via an image forming means comprising a diffraction optical element (DOE) that is in the form of a disc 17 of polycarbonate secured over the aperture 16. The disc 17 acts by optical interference to diffract the light from the aperture 16 into an image that is projected forward through the disc 2.

The LED 10 and the laser module 11 are connected in individual circuits of the printed-circuit board 12 to be energised 10 electrically from a common power source, i.e. a battery 18 housed in the rear of the light-projecting device. The energisation circuit for the LED 10 extends from one pole 19 of the battery 18 through an individual contact switch 20 of the board 12 and the LED 10 in series, to 'return' to the other pole 21 of the battery 18 via the casing 1 and cap 3. Similarly, the energisation circuit for the laser module 11 extends from the pole 19 of the battery 18 via an individual contact switch 22 of the board 12 and the module 11 in series, and 'returns' via the casing 1 and cap 3 to the other pole 21. Each switch 20 and 22 has a button 23 that when depressed sequentially steps the switch successively through a repeating sequence of three distinct conditions: 'ON', 'FLASHING' and 'OFF'.

While the switch 20 is in the 'ON' condition the energisation circuit of the LED 10 is closed directly through the switch 20 so that the LED 10 emits light continuously, whereas while the switch 20 is in the 'FLASHING' condition the energisation circuit is completed through the switch 20 via an individual flasher circuit (not shown) on the PCB 12. The flasher circuit interrupts the circuit intermittently (for example at an on-off frequency of around 3-4 Hz) so that only flashes of light are then emitted by the LED 10. The energisation circuit of the LED 10 is open when the switch 20 is in the 'OFF' condition so that no light is then emitted by the LED 10.

Similar operation of the laser module 11 occurs in dependence on the condition of the switch 22, in that when the switch 22 is in the 'ON' condition the module 11 is energised continuously to emit light in the form of the image imposed by the disc 17, whereas when the switch 22 is in the 'FLASHING' condition, an individual flasher circuit (not shown) on the PCB 12 is included in the energisation circuit by the switch 22 to cause the light emitted by the module 11 to flash intermittently (for example with an on-off frequency of around 3-4 Hz). The energisation circuit of the module 11 is broken at the switch 22 so that no image is projected when the switch 22 is in the 'OFF' condition.

During assembly of the light-projecting device, the sub-assembly 14 is entered into the casing 1 from the front-end and then closed by the disc 2 with the switches 20 and 22 located in register with apertures 24 and 25 respectively through the casing 1 within the indented portion 5 (see Fig. 2). Pusher-buttons 26 and 27 of plastics material are located in the apertures 24 and 25 to abut the buttons 23 of the switches 20 and 22 respectively, and a rubber-seal plate 28 is secured over them within the indented portion 5. The thin, metal panel 4 is bonded to the plate 28 with the etched indicia located where depression by finger or thumb will cause the underlying pusher-button 26 or 27 to actuate the button 23 of the relevant switch 20 or 22.

The battery 18, which is preferably a lithium battery, is inserted into the casing 1 with its pole 19 making contact with the energisation circuits of the PCB 12. The cap 3 is then screwed onto the casing 1 with an 'O'-ring 29 for waterproof sealing, and completes the 'return' paths via the casing 1 to the pole 21 of the battery 18. In circumstances where the battery 18 is re-chargeable, provision for charging may be made by contact connections (not shown) through the casing 1 and / or cap 3.

A threaded hole 30 in the underside of the casing 1 facilitates mounting of the light-projecting device on a suitable mount on the bicycle (or other vehicle), as will be described in more detail below. For safety, provision is desirably made to ensure that the laser-module 11 cannot be energised unless and until the light-projecting device is fully established on its mount. In this regard for example, the mount may incorporate a magnetic member, such as a rare-earth magnet or the like, and the light-projection device may then include a magnetic switch component, such as a Hall-effect device or reed switch connected with the energisation circuit of the laser-module 11. The purpose of the magnetic switch component is to communicate with the PCB 12 to complete that circuit under the influence of the magnet when the switch 22 is in the 'ON' or 'FLASHING' condition, only when the device is fully established on the mount, but otherwise to hold that circuit open irrespective of the condition of the switch 22.

When the light-projecting device is fully established on its mount on the bicycle (or other vehicle), finger- or thumb-operation of the control panel 4 to actuate the switch 20 to its 'ON' or 'FLASHING' condition, will result in light from the LED 10 illuminating the path ahead of the vehicle. Corresponding actuation of the switch 22 will energise the laser module 11 to project an image determined by the interference pattern of the disc 17, into that path. The light emitted in each case will be continuous or flashing depending on whether the switch-selection is of the 'ON' or 'FLASHING' condition.

A cord or chain may be attached to the light-projecting device by threading it through holes 31 in the cap 3.

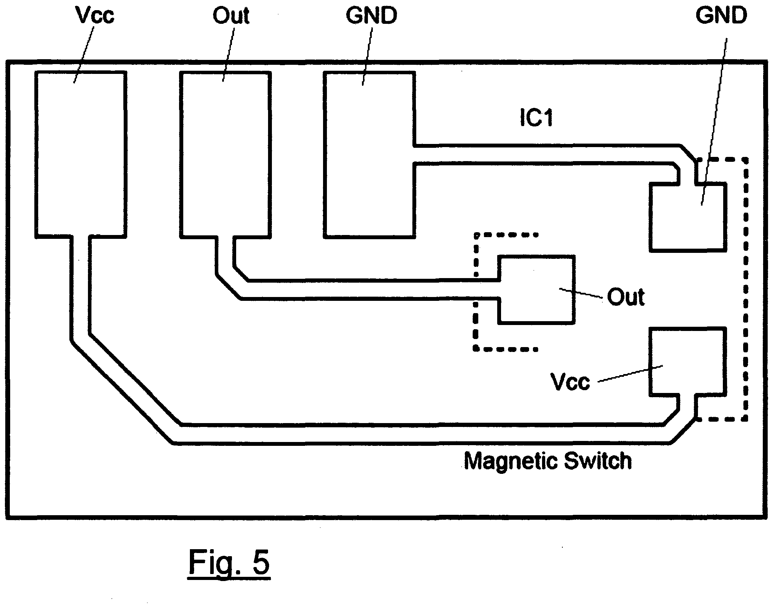

A diagram of an exemplary switching circuit for the device of the present invention is shown schematically in Fig. 5. Here it can be seen that the magnetic switching component is operable to switch the output signal "Out" between a lighting voltage Vcc and ground "GND".

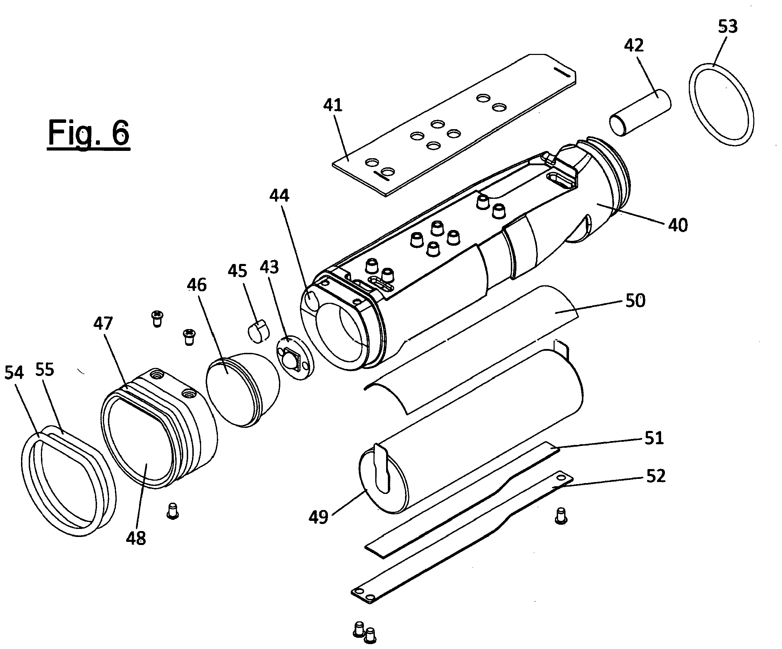

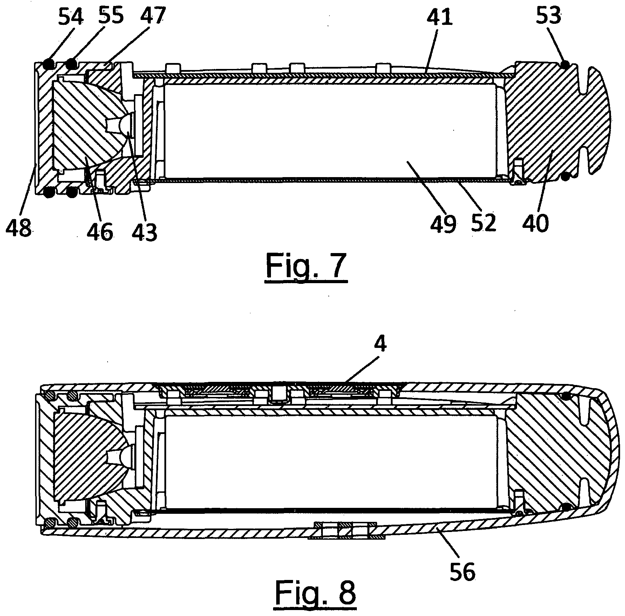

A further embodiment of the present invention is shown in Figs. 6, 7 and 8, with Fig. 6 schematically showing an exploded perspective view of internal components of a the device, Fig. 7 being a schematic sectional view of the components of Fig. 6, and Fig. 8 being similar to Fig. 7 but additional showing a casing.

Here, and as shown in Fig. 7, a casing 56 generally similar to casing 1 of the first embodiment is used to house the internal components shown in Figs. 6 and 7. Here, a modified form of chassis 40 is used, which may for example be die-cast, the shape of which substantially conforms to that of the internal surface of the casing 56. The chassis 40 carries a PCB 41 on which the respective energisation circuits for a laser unit 42 and LED light source 43 are at least partially provided. As in the first embodiment PCB 41 carries respective contact switches (not shown) for the laser and LED, which are operable by pressing corresponding regions of the casing 56, e.g. via a thin, metal plate as in the first embodiment.

It can be seen that a laser unit 42 is mounted within an aperture provided at the rear of the chassis 40, while an LED source 43 and associated reflector 46, for example a parabolic reflector, are received at the front end of the chassis 40. A channel 44 extends through the length of the chassis, offset from the radial centre, from front to rear and connecting the laser unit's mounting aperture, allowing laser light from the unit to pass through the chassis to the front. A DOE 45 is retained in the front portion of the channel 44 to create an image as in the first embodiment. The reflector 46 and LED source 43 are held in place within the chassis 40 by an end cap 47. End cap 47 comprises a transparent disc 48 at its end, allowing both light from LED source 43 and laser light from unit 42 to pass therethrough.

The underside of the chassis 40 carries a battery module comprising a battery 49, e.g. a lithium-ion cell, with associated insulating liners 50 and 51 respectively provided above and below the battery 49. The battery is retained in chassis 40 by a retainer plate 52 which is fixedly attached to the chassis 40 in use, retaining the battery and insulating liners therebetween.

The rear end of chassis 40 is provided with an O-ring 53, which end cap 47 also carries axially displaced O-rings 54 and 55, to ensure a water-tight fitting within the casing 56.

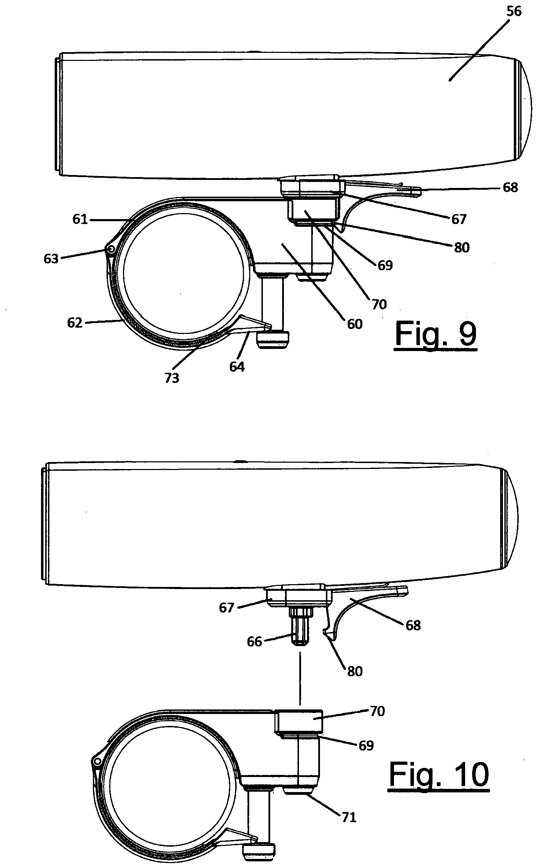

Figs. 9 to 12 schematically show a mounting mechanism for the device of this second embodiment. It should immediately be noted however that while, for the sake of example, the mounting is described with reference to this second embodiment, a very similar mounting mechanism could be used with the device of the first embodiment, with minimal changes being required.

Fig. 9 schematically shows the light-projecting unit in its casing 56 attached to a mount 60. Mount 60 includes attachment means for attaching the mount to a bicycle, the attachment means including a projecting bracket 61 which arcs along a generally circular path, with bracket 61 being pivotably connected, via a pivot 63, at its distal end to an arm 62, which is substantially formed as an arc of the same radius of curvature as bracket 61, the arrangement being such that when in a closed configuration, the interior surfaces of bracket 61 and arm 62 substantially define a closed circle for receiving a bicycle's handlebar 79. The interior surface of bracket 61 and arm 62 is covered by a flexible rubber spacer 73 to provide an enhanced grip on the handlebar. Spacer 73 is biased into an extended position to help arm 62 open when required. The distal end of arm 62 includes substantially "C"-shaped jaws 64 for receiving the shaft of a bolt 65 which is received, by screw-fitting, within the body of mount 60 and in use extends downwardly therefrom. To attach the mount 60 to a handlebar (not shown), the arm 62 is pivoted open, the bracket 61 and arm 62 are closed around the handlebar so that the jaws 64 receive the shaft of bolt 65, and the bolt 65 is tightened, by screwing into the mount 60, to clamp the handlebar as required, with the head of the bolt 65 pressing against the underside of jaws 64. In order to accommodate handlebars of a range of diameters, one or more additional flexible rubber spacers (not shown) may be inserted between the arm / bracket and the handlebar before clamping. In order to remove the mount, the process is reversed. It should be noted that bolt 65 need never be fully removed from the mount 60, just retracted sufficiently to enable jaws 64 to pass its head.

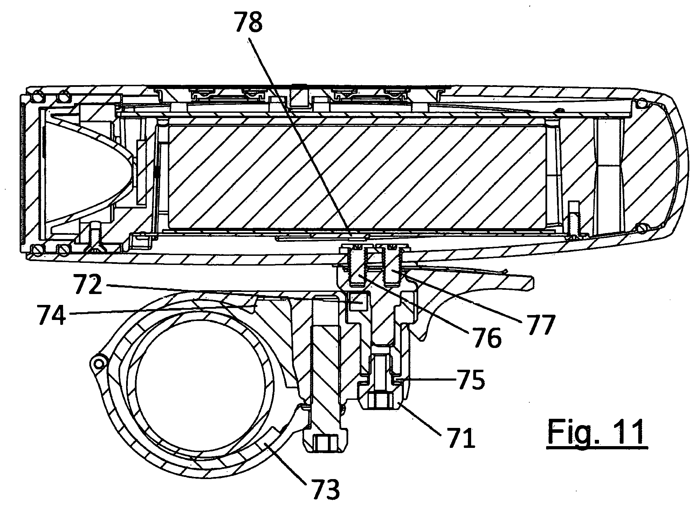

Mount 60 is modular, and includes a separate receptacle, i.e. a bracket cup 70 having a vertical-axis aperture to receive in use a stem 66 (see Fig. 10) of a device adaptor 67, which is semi-permanently attached to the underside of light-projecting unit casing 56. Adaptor 67 includes a projecting leaf-spring lever 68 which carries a tab 80. When connected to the mount body, the tab 80 engages with a projecting lip 69 which extends around the perimeter of the bracket cup 70 to prevent relative vertical movement therebetween. This engagement can be released by manually lifting the lever 68 to move it toward the casing 56 and the tab 80 away from lip 69, so that the stem 66 can be slid up and out of the cup 70. Cup 70 is lockable with respect to the mount body by means of a bolt 71, shown in more detail in Fig. 11.

Fig. 10 schematically shows the mounting mechanism of Fig. 9 but in a partially disassembled state, with lever 68 raised and the adaptor 67 removed from cup 70. Here it can be seen that stem 66 is not of circular but of asymmetric polygonal cross-section, with the aperture of cup 70 being correspondingly formed. This means firstly that stem 66 can only be received within the aperture in one orientation, and secondly that once received, it cannot rotate relative thereto.

Fig. 11 schematically shows a sectional view of the mounting mechanism of Fig. 9, where incidentally the mount has been tightened to cater for a relatively small-diameter handlebar. Firstly, it can be seen that the mount body includes a socket 74 to receive and retain a corresponding plug of the rubber spacer 73. Cup 70 includes, proximate its upper extent, a magnetic member such as a rare earth magnet 72. Cup 70 receives bolt 71 at its lower end. Between the head of bolt 71 and cup 70 is a flange 75 of the mount body, such that tightening of the bolt 71 into the cup causes the cup to be securely locked to the body. Adaptor 67 is affixed to casing 56 by means of two bolts 76, 77, which prevent relative rotation of the adaptor 67 and casing 56. The bolts 76, 77, if made of metal, also help to direct the magnetic flux from magnet 72 to the casing 56. A small printed circuit board 78, which includes a magnetic switch component such as a Hall-effect sensor or reed switch (not shown) forming part of the energisation circuit for the laser unit 42, is located proximate the lower side of casing 56, adjacent the bolt 76 in use, so that it is under the influence of the magnetic flux from magnet 72 only when the adaptor is correctly received within cup 70.

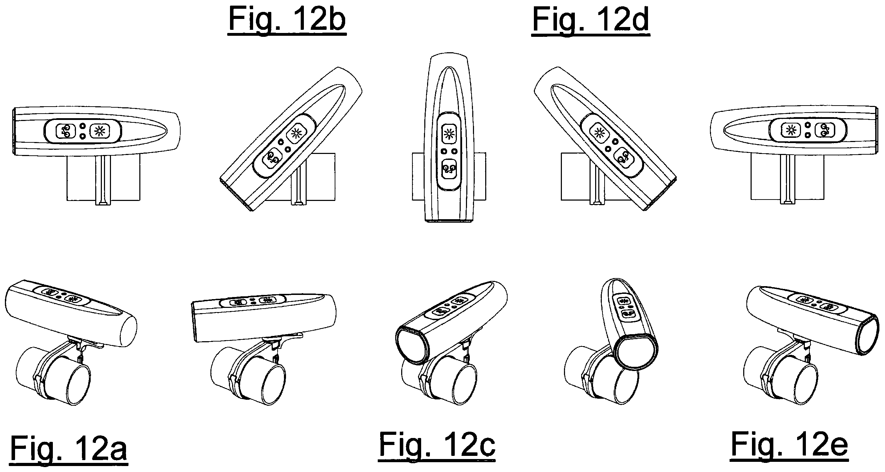

Cup 70 is relatively rotatable with respect to the mount body, enabling the left-right direction of the light-projecting device to be infinitely adjusted within a range delimited by abutment of the lever 68 with the mount body or handlebar. In this way, some angular positions, in particular those with a rear-facing light-projecting unit, are prevented to avoid clearly unwanted or dangerous positions (such as with the unit pointing backwards and shining LED or laser light towards the cyclist) from being used. This is schematically shown in Figs. 12a-e, which show the device at five different possible angular positions relative to the handlebar 79. It should be noted that whichever angular position is used, the bolt 76 will remain proximate the magnetic switch component, due to the cup and casing being moved in concert.

In use, firstly the mount is clamped to the handlebar as outlined above. Bracket cup 70 is placed in the mount body with the stem 66 received and engaged therein. The left-right positioning of the light-projecting unit is adjusted until it is as required, and then the unit is held in that position by tightening bolt 71, to hold the cup 70 fixed relative to the mount body.

The above-described embodiments are exemplary only, and other possibilities and alternatives within the scope of the invention will be apparent to those skilled in the art. For example, separate power sources may be provided for each of the LED and the laser unit.

While a bolt 76 has been shown as focussing the magnetic flux to the Hall-effect sensor, other techniques may be used, for example other flux guidance components, or the sensor could simply be kept at a position closer to the magnet in use, and the strength of the magnet selected accordingly.

## Claims

1. A light-projecting device for use on a vehicle, the device comprising a laser unit (11) and a light source (10),
wherein the laser unit (11) comprises a laser source and an image forming means,
wherein the light source produces a visible light beam in use, and
**characterized in that** the image forming means includes a diffraction optical element (17) configured for acting by optical interference to diffract the laser light produced by the laser source to project a predetermined image onto a surface external to the vehicle in use.

2. A device according to claim 1, comprising a common power source (18) for powering the light source and the laser source.

3. A device according to claim 1, comprising first and second power sources for respectively powering the light source and the laser source.

4. A device according to either of claims 2 and 3, wherein the laser unit (11) and the light source (10) comprise respective energization circuits for supplying power from a power source to the laser source or light source.

5. A device according to claim 4, wherein the respective energization circuits for the laser unit and light source are at least partially provided on a common printed circuit board located within the device.

6. A device according to claim 5, wherein the respective energization circuits comprise respective switches (20, 22) mounted on the printed circuit board.

7. A device according to claim 6, comprising a magnetic switch component for selectively opening and closing the energization circuits.

8. A device according to claim 7, wherein the magnetic switch component comprises a Hall-effect switch component.

9. A device according to any of claims 5 to 8, comprising a chassis which carries the printed circuit board and the laser source.

10. A device according to claim 9, wherein the chassis carries the light source.

11. A device according to any preceding claim, wherein the laser source produces green laser light in use.

12. A device according to any preceding claim, wherein the light source (10) comprises an LED (10).

13. A device according to any preceding claim, for acting as a front light of a bicycle and the external surface comprises the path ahead of the bicycle.

14. A device according to any of claim 1 to 12, for acting as a rear light of a bicycle, and the external surface comprises the path behind the bicycle.

15. A device according to either of claims 13 and 14, wherein the predetermined image comprises an image of a bicycle.

## Patentansprüche

1. Lichtprojektionsvorrichtung zur Verwendung auf einem Fahrzeug, wobei die Vorrichtung eine Lasereinheit (11) und eine Lichtquelle (10) umfasst,
wobei die Lasereinheit (11) eine Laserquelle und ein Bilderzeugungsmittel umfasst,
wobei die Lichtquelle bei der Verwendung einen sichtbaren Lichtstrahl produziert und
**dadurch gekennzeichnet, dass** das Bilderzeugungsmittel ein optisches Beugungselement (17) umfasst, das konfiguriert ist, um durch optische Interferenz zu wirken, um das von der Laserquelle produzierte Laserlicht zu beugen, um ein vorbestimmtes Bild auf eine Oberfläche außerhalb des Fahrzeugs in Verwendung zu projizieren.

2. Vorrichtung nach Anspruch 1, die eine gemeinsame Leistungsquelle (18) zum Betreiben der Lichtquelle und der Laserquelle umfasst.

3. Vorrichtung nach Anspruch 1, die eine erste und zweite Leistungsquelle umfasst, um die Lichtquelle bzw. die Laserquelle zu betreiben.

4. Vorrichtung nach einem der Ansprüche 2 und 3, wobei die Lasereinheit (11) und die Lichtquelle (10) entsprechende Einspeisungsschaltungen umfassen, um Leistung von einer Leistungsquelle an die Laserquelle oder Lichtquelle bereitzustellen.

5. Vorrichtung nach Anspruch 4, wobei die entsprechenden Einspeisungsschaltungen für die Lasereinheit und die Lichtquelle zumindest teilweise auf einer gemeinsamen, in der Vorrichtung angeordneten Leiterplatte bereitgestellt sind.

6. Vorrichtung nach Anspruch 5, wobei die entsprechenden Einspeisungsschaltungen entsprechende Schalter (20,22) umfassen, die auf der Leiterplatte montiert sind.

7. Vorrichtung nach Anspruch 6, die eine Magnetschalterkomponente umfasst, um die Einspeisungsschaltungen selektiv zu öffnen und zu schließen.

8. Vorrichtung nach Anspruch 7, wobei die Magnetschalterkomponente eine Hall-Effekt-Schalterkomponente umfasst.

9. Vorrichtung nach einem der Ansprüche 5 bis 8, die einen Rahmen umfasst, der die Leiterplatte und die Laserquelle trägt.

10. Vorrichtung nach Anspruch 9, wobei der Rahmen die Lichtquelle trägt.

11. Vorrichtung nach einem der vorangehenden Ansprüche, wobei die Laserquelle bei der Verwendung grünes Laserlicht produziert.

12. Vorrichtung nach einem der vorangehenden Ansprüche, wobei die Lichtquelle (10) eine LED (10) umfasst.

13. Vorrichtung nach einem der vorangehenden Ansprüche zum Fungieren als Vorderlicht eines Fahrrads, und wobei die Außenfläche den Weg vor dem Fahrrad umfasst.

14. Vorrichtung nach einem der Ansprüche 1 bis 12 zum Fungieren als Rücklicht eines Fahrrads, und wobei die Außenfläche den Weg hinter dem Fahrrad umfasst.

15. Vorrichtung nach einem der Ansprüche 13 und 14, wobei das vorbestimmte Bild ein Bild eines Fahrrads umfasst.

## Revendications

1. Dispositif d'éclairage destiné à être utilisé sur un véhicule, le dispositif comprenant une unité de laser (11) et une source de lumière (10),
dans lequel l'unité de laser (11) comprend une source de laser et un moyen de formation d'image,
dans lequel la source de lumière produit un faisceau de lumière visible pendant son utilisation, et
**caractérisé en ce que** le moyen de formation d'image comprend un élément optique de diffraction (17) configuré pour agir par interférence optique afin de diffracter la lumière laser produite par la source de laser de façon à projeter une image prédéterminée sur une surface externe au véhicule pendant l'utilisation.

2. Dispositif selon la revendication 1, comprenant une source d'alimentation commune (18) destinée à alimenter la source de lumière et la source de laser.

3. Dispositif selon la revendication 1, comprenant une première et une seconde sources d'alimentation destinées à alimenter respectivement la source de lumière et la source de laser.

4. Dispositif selon l'une des revendications 2 et 3, dans lequel l'unité de laser (11) et la source de lumière (10) comprennent des circuits d'énergisation respectifs destinés à fournir de l'énergie entre une source d'alimentation et la source de laser ou la source de lumière.

5. Dispositif selon la revendication 4, dans lequel les circuits d'énergisation respectifs destinés à l'unité de laser et à la source de lumière sont au moins partiellement prévus sur une carte de circuit imprimé commune située dans le dispositif.

6. Dispositif selon la revendication 5, dans lequel les circuits d'énergisation respectifs comprennent des commutateurs respectifs (20, 22) montés sur la carte de circuit imprimé.

7. Dispositif selon la revendication 6, comprenant un composant de commutateur magnétique destiné à ouvrir et à fermer sélectivement les circuits d'énergisation.

8. Dispositif selon la revendication 7, dans lequel le composant de commutateur magnétique comprend un composant de commutateur à effet Hall.

9. Dispositif selon l'une quelconque des revendications 5 à 8, comprenant un châssis qui porte la carte de circuit imprimé et la source de laser.

10. Dispositif selon la revendication 9, dans lequel le châssis porte la source de lumière.

11. Dispositif selon l'une quelconque des revendications précédentes, dans lequel la source de laser produit une lumière laser verte pendant l'utilisation.

12. Dispositif selon l'une quelconque des revendications précédentes, dans lequel la source de lumière (10) comprend une LED (10).

13. Dispositif selon l'une quelconque des revendications précédentes, destiné à agir comme un phare avant d'une bicyclette, et dont la surface externe comprend le trajet situé face à la bicyclette.

14. Dispositif selon l'une quelconque des revendications 1 à 12, destiné à agir comme un phare arrière d'une bicyclette, et dont la surface externe comprend le trajet situé derrière la bicyclette.

15. Dispositif selon l'une des revendications 13 et 14, dans lequel l'image prédéterminée comprend une image d'une bicyclette.
